# EUROPEAN PATENT SPECIFICATION

(11) **EP 0 799 265 B1**
(45) Date of publication and mention of the grant of the patent: **29.07.1998**
(21) Application number: 95942738.6
(22) Date of filing: 20.12.1995
(51) Int. Cl.: C08G 59/12, C08L 63/00, C08L 71/02, C08G 65/32

(54) **EPOXY-FUNCTIONAL POLYETHERS**
EPOXYPOLYETHER
POLYETHERS A FONCTIONNALITE EPOXY

(30) Priority: 21.12.1994 US 361076
(43) Date of publication of application: 08.10.1997
(73) Proprietor: SHELL INTERNATIONALE RESEARCH MAATSCHAPPIJ B.V., 2596 HR Den Haag (NL)
(72) Inventor: GALGOCI, Ernest, Charles, Jr., Sugar Land, TX 77479 (US)
(74) Representative: Zeestraten, Albertus Wilhelmus Joannes
(86) International application number: EP9505161
(87) International publication number: WO9619516

(56) References cited:
- EP-A- 0 581 599
- EP-A- 0 618 245
- CH-A- 410 431
- CH-A- 454 455
- GB-A- 2 113 690
- US-A- 4 497 945

## Description

The invention relates to epoxy-functional polyethers as emulsifiers and/or reactive diluents for aqueous based epoxy resin compositions.

There are ever increasing demands for compounds useful in epoxy resin applications, for example as emulsifiers or diluents, as epoxy resins are required to perform under ever more specific and demanding conditions. In this respect reference is especially made to aqueous based epoxy resin compositions which are more environment-friendly than the classic organic solvent based systems. Such aqueous based systems require specific emulsifiers and/or diluents which have to be compatible with the aqueous phase as well as with the organic phase. It is desirable for such compounds to have epoxy functional groups to increase the compatibility with the cured epoxy matrix. Further, it is desirable to be able to provide compounds with predefined hydrophilic and hydrophobic segments depending on the desired applications.

It is an object of the present invention to provide compositions comprising epoxy-functional polyethers as emulsifiers and/or reactive diluents for aqueous based epoxy resin compositions.

It has been found that compositions comprising certain epoxy-functional polyethers can be made, which polyethers are very suitable for use as emulsifier and/or reactive diluent in e.g. aqueous epoxy resin compositions which are suitable for coating purposes, by reaction of certain dicarboxylic acids and epoxy resins having more than one epoxy group.

Thus, the present invention relates to aqueous based epoxy resin compositions comprising an epoxy resin and as an emulsifier and/or reactive diluent a product produced by reacting (a) a carboxylic acid having the formula: 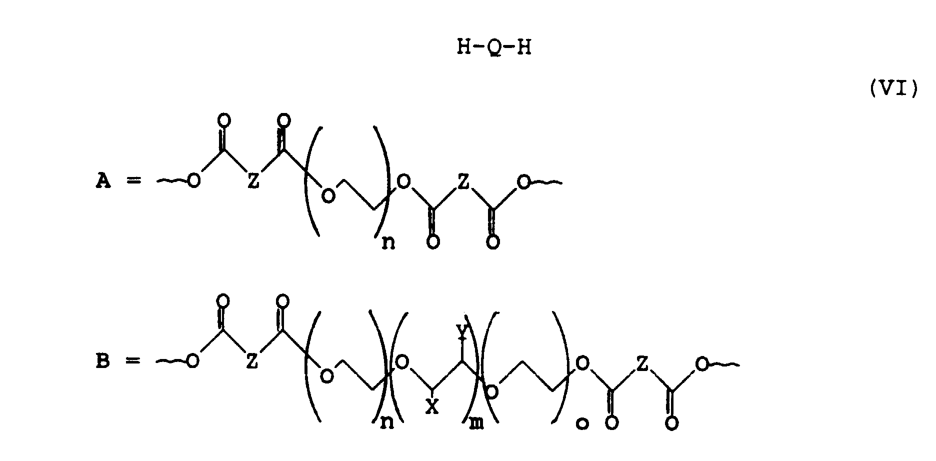 wherein Q is A or B, Z is a C₁₋₂₀ hydrocarbylene moiety, X and Y are independently a hydrogen, methyl or ethyl group with the provision that if X is methyl or ethyl, Y is hydrogen or if Y is methyl or ethyl, X is hydrogen, and n or n+m+o is a positive real number from 1 to 450 and (b) an epoxy resin having a functionality of at least 1.5 epoxide group per molecule in a carboxylic acid to epoxy resin mole ratio of from 1:2 to 1:20.

The hydrophilic carboxylic acid can be produced by reacting a polyethylene glycol, polypropylene glycol, polybutylene glycol or a block copolymer of ethylene oxide and propylene oxide or polybutylene oxide ("polyalkylene glycol") with an anhydride. Preferably the polyalkylene glycol has a formula: 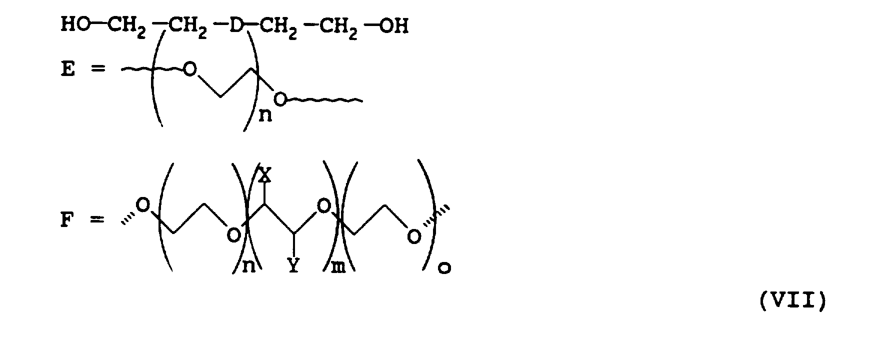 wherein D is E or F, X and Y are independently hydrogen, methyl or ethyl groups with the provision that if X is methyl or ethyl, Y is hydrogen or if Y is methyl or ethyl, X is hydrogen and m+n+o is a positive real number from 1, preferably from 20 to 450, preferably to 400 and m, n and o can independently be a positive real number from 0 to 450.

Polyalkylene glycols generally contain a distribution of compounds with a varying number of oxyethylene units, n or o and/or oxypropylene or oxybutylene units, m. Generally, the quoted number of units is the whole number closest to the statistical average, and the peak of the distribution. Positive real number as used herein refers to a number which is positive and includes integers and fractions of integers.

The carboxylic acids can be produced by reacting the polyalkylene glycols with a cyclic anhydride to prepare the corresponding diacids. Preferable cyclic anhydrides include, for example, methylhexahydrophthalic anhydride, ethylhexahydrophthalic anhydride, phthalic anhydride, tetrahydrophthalic anhydride, succinic anhydride, maleic anhydride, bicyclo[2.2.1]heptane, 2,3-dicarboxylic anhydride and chlorendic anhydride. The mole ratio of the polyalkylene glycol to anhydride is within the range of about 1:2 to about 1:1.8, preferably in an equivalent amount. When determining the mole ratio or equivalency of the polyalkylene glycol and the anhydride, the hydroxyl group in the polyalkylene glycol is counted as 2 and the carboxylic acid groups in the anhydride are counted as 1.

The carboxylic acid can be represented by the general formula:

H-Q-H (VI)

wherein Q, X, Y and Z are defined above. Preferably Z is C₁₋₂₀ alkylene, C₃₋₂₀ cycloalkylene which includes bicyclic moieties, C₄₋₂₀ alkylene substituted cycloalkylene, C₆₋₂₀ arylene, or C₇₋₂₀ alkyl substituted arylene. More preferably Z is C₁₋₂₀ alkylene, C₅₋₆ cycloalkylene, C₆₋₁₂ arylene, C₇₋₂₀ alkylene substituted cycloalkylene or C₇₋₂₀ alkyl substituted arylene. In a most preferred embodiment Z corresponds to 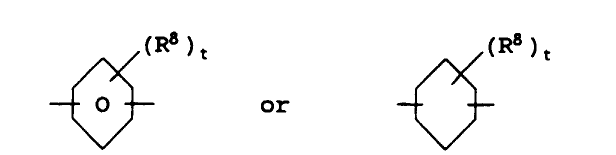 wherein R⁸ is C₁₋₁₀ alkyl, and t is 0 or 1. Preferably R⁸ is C₁₋₃ alkyl, and most preferably methyl.

The epoxy-functional polyethers of the invention are produced by reacting the carboxylic acid described above with a hydrophobic epoxy resin. Generally, the epoxy resin can be any reactive epoxy resin having a 1,2-epoxy equivalency (functionality) preferably, on the average, greater than 1.5 epoxide groups per molecule. The epoxy resin can be saturated or unsaturated, linear or branched, aliphatic, cycloaliphatic, aromatic or heterocyclic, and may bear substituents which do not materially interfere with the reaction with the carboxylic acid. Such substituents can include bromine or fluorine. They may be monomeric or polymeric, liquid or solid, but are preferably liquid or a low melting solid at room temperature. Suitable epoxy resins include glycidyl ethers prepared by reacting epichlorohydrin with a compound containing a real positive number of at least 1.5 aromatic hydroxyl group carried out under alkaline reaction conditions. Examples of epoxy resins suitable for use in the invention include diglycidyl ethers of dihydric compounds. Generally epoxy resins contain a distribution of compounds with a varying number of 1,2-epoxy equivalency.

Preferred epoxy resins include, but are not limited to those represented by the formula: 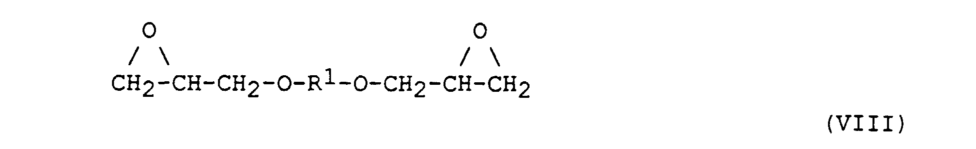 wherein R¹ is divalent aliphatic, divalent cycloaliphatic, divalent aryl or divalent arylaliphatic group, preferably R¹ contains about 8 to 120 carbon atoms. The term divalent aliphatic group includes compounds having oxygen atoms and/or sulphur atoms on the backbone. For example, R¹ can be a divalent cylcoaliphatic group having the formula 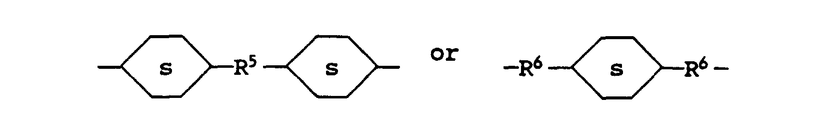 wherein R⁵ and R⁶ are each independently an alkylene group or a divalent arylaliphatic group having the formula 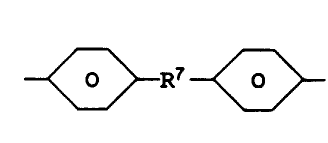 wherein R⁷ is an alkylene group.

Preferably the epoxy resin is a diglycidyl ether of a dihydric phenol, diglycidyl ether of a hydrogenated dihydric phenol (cycloaliphatic glycidyl ether), an aliphatic glycidyl ether or cycloaliphatic epoxies.

Diglycidyl ethers of dihydric phenols can be produced, for example, by reacting an epihalohydrin with a dihydric phenol in the presence of an alkali. Examples of suitable dihydric phenols include: 2,2-bis (4-hydroxyphenyl) propane (bisphenol-A); 2,2-bis (4-hydroxy-3-tert-butylphenyl) propane; 1,1-bis-(4-hydroxyphenyl) ethane; 1,1-bis(4-hydroxyphenyl) isobutane; bis (2-hydroxy-1-naphthyl) methane; 1,5-dihydroxynaphthalene; 1,1-bis (4-hydroxy-3-alkylphenyl) ethane and the like. Suitable dihydric phenols can also be obtained from the reaction of phenol with aldehydes such as formaldehyde (bisphenol-F). Diglycidyl ethers of dihydric phenols includes fusion products of the above diglycidyl ethers of dihydric phenols with phenolic compounds such as bisphenol-A, such as those described in U.S. Patent Nos. 3,477,990 and 4,734,468.

Diglycidyl ethers of hydrogenated dihydric phenols (or cycloaliphatic glycidyl ethers) can be produced, for example, by hydrogenation of dihydric phenols followed by glycidation with epihalohydrin in the presence of a Lewis acid catalyst and subsequent formation of the glycidyl ether by reaction with sodium hydroxide. Examples of suitable dihydric phenols are listed above.

Aliphatic glycidyl ethers optionally containing oxygen atoms on the backbone in the form of ether linkages can be produced, for example, by reacting an epihalohydrin with an aliphatic diol or a polyalkyleneoxide glycol in the presence of a Lewis acid catalyst followed by conversion of the halohydrin intermediate to the glycidyl ether by reaction with sodium hydroxide. Examples of preferred aliphatic glycidyl ethers include those corresponding to the formulas: 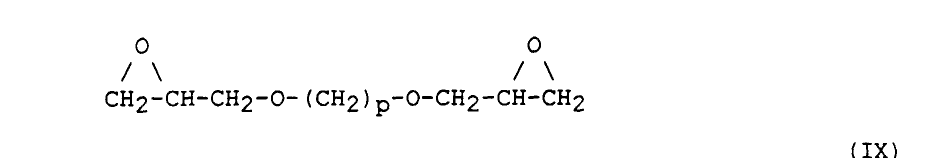 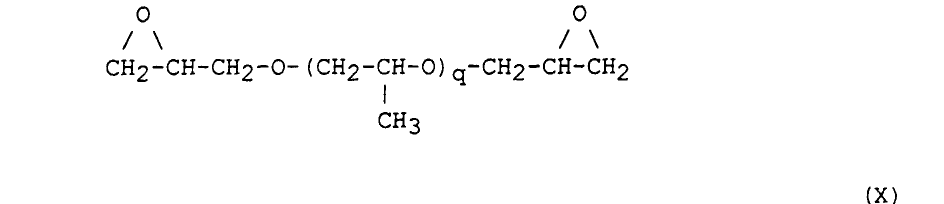 wherein:
p is an integer from 2 to 12, preferably from 2 to 6; and
q is an integer from 4 to 24, preferably from 4 to 12.

Examples of suitable aliphatic glycidyl ethers include for example, diglycidyl ethers of 1,4 butanediol, neopentyl glycol, cyclohexane dimethanol, hexanediol, polypropylene glycol, and like diols and glycols; and triglycidyl ethers of trimethylol ethane and trimethylol propane.

Cycloaliphatic epoxies can be produced by epoxidizing a cycloalkene-containing compound with greater than one olefinic bond with peracetic acid. Examples of the preferred cycloaliphatic epoxies include those corresponding to the formulas: 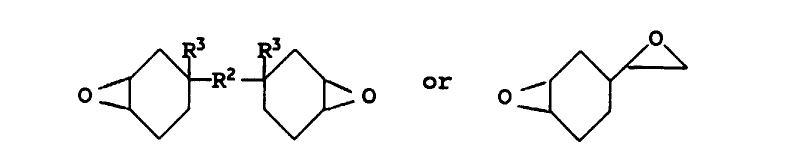 wherein R² is a divalent aliphatic group optionally containing ether or ester groups or together with R³ or R⁴ form a spiro ring optionally containing heteroatoms, and R³ and R⁴ are independently hydrogen or R³ or R⁴ together with R² form a spiro ring optionally containing heteroatoms such as oxygen. Preferably R² contains about 1 to 20 carbon atoms. Examples of cycloaliphatic epoxies include, for example, 3,4-epoxycyclohexylmethyl(3,4-epoxy)cyclohexane carboxylate, dicycloaliphatic diether diepoxy [2-(3,4-epoxy)cyclohexyl-5,5-spiro-(3,4-epoxy)-cyclohexane-m-dioxane], bis(3,4-epoxycyclohexylmethyl)adipate, bis(3,4-epoxycyclohexyl)adipate and vinylcyclohexene dioxide [4-(1,2-epoxyethyl)-1,2-epoxy-cyclohexane]. Cycloaliphatic epoxies include compounds of the formulas:

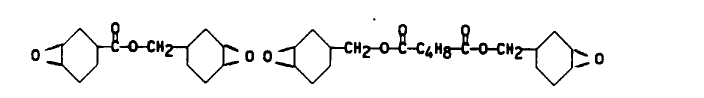

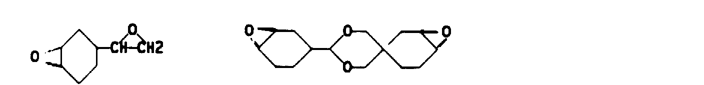

Commercial examples of preferred epoxy resins include, for example, EPON Resins DPL-862, 828, 826, 825, 1001, EPONEX Resin 1510, HELOXY Modifiers 107, 67, 68, and 32 (EPON, EPONEX and HELOXY are trademarks) all available from Shell Chemical Company and Union Carbide Epoxy Resins ERL-4221, -4289, -4299, -4234 and -4206.

The carboxylic acid is contacted with the epoxy resin under conditions effective to react the acid group and the epoxide group and to produce epoxy-functional polyethers represented by the formulas: 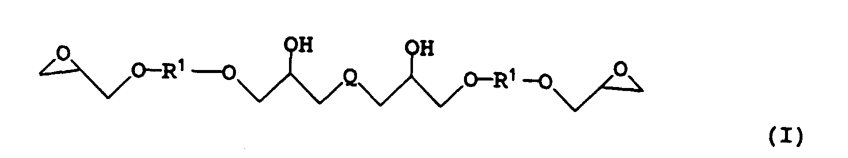 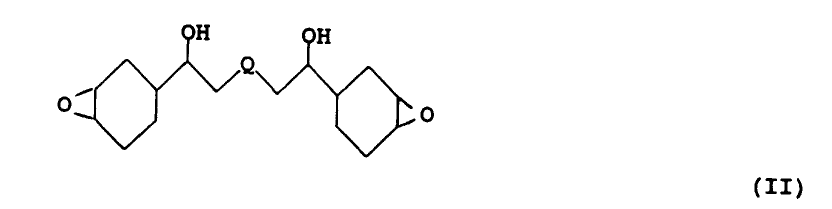 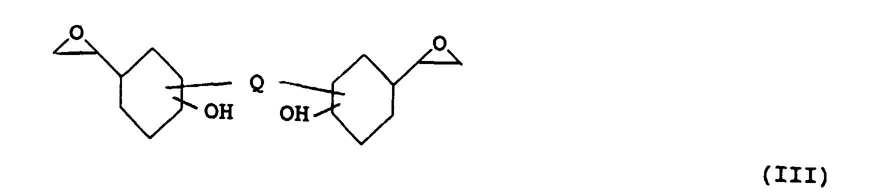 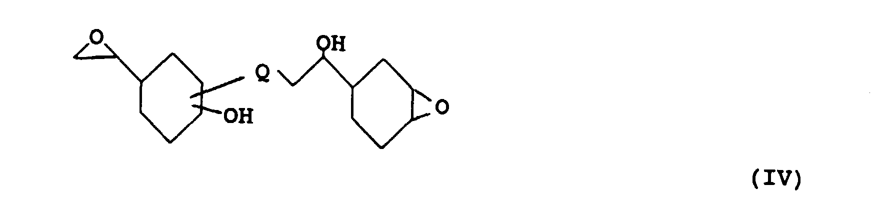 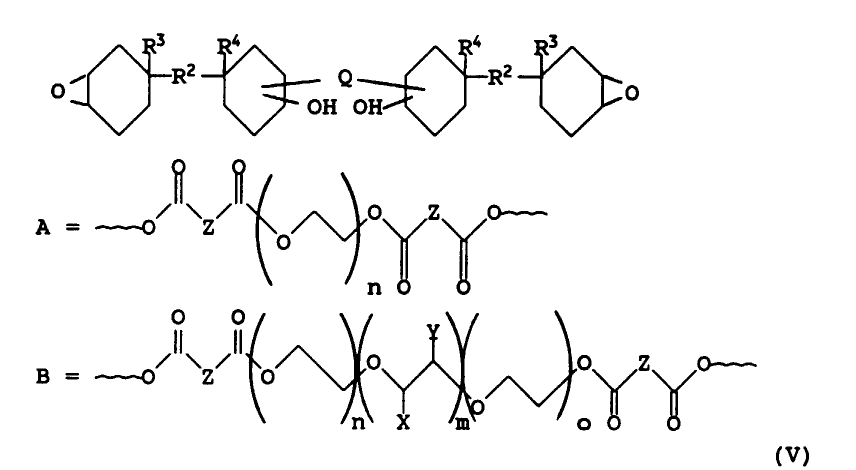 wherein Q is A or B, R¹ is independently a divalent hydrocarbon group, said divalent hydrocarbon groups having 8 to 120 carbon atoms, X and Y are independently a hydrogen, methyl or ethyl group with the provision that if X is methyl or ethyl, Y is hydrogen or if Y is methyl or ethyl, X is hydrogen and n or m+n+o is a positive real number from 1 to 450, R² is a divalent aliphatic group optionally containing ether or ester groups or together with R³ or R⁴ form a spiro ring optionally containing heteroatoms, and R³ and R⁴ are independently hydrogen or R³ or R⁴ together with R² form a spiro ring optionally containing heteroatoms such as oxygen. The location of the OH and Q bonding to the cycloaliphatic ring represents the different isomers formed by the cycloaliphatic ring opening reaction. It can be appreciated that the diacid Q moiety can be attached to either para-or meta- position from R² or epoxy moiety.

Typically, the mole ratio of the carboxylic acid to epoxy resin is within the range of from 1:2, more preferably from 1:3 to 1:20, more preferably to 1:10. The reaction is typically carried out at a temperature from ambient temperature to an elevated temperature sufficient to react the acid group and the epoxide group which is typically within the range of from 25 °C, preferably from 60 °C, to 150 °C, preferably to 130 °C for a time effective to produce the reaction products. The progress of the reaction can be monitored and targeted to produce the desired product by measuring the acid equivalent weight and the epoxy equivalent weight of the reactant mixture. Generally, the reaction mixture is heated until an acid equivalent weight of the mixture indicates that greater or equal than 99% of the original number of equivalents of acid is consumed, and at least an equivalent amount of epoxies is consumed which is generally one hour or greater. For cycloaliphatic epoxies, the monitoring of the course of reaction by following consumption of epoxy alone can be misleading, due to competing homopolymerization of this type of epoxy group. Preferably, this reaction is carried out in the presence of a catalyst.

The reaction typically produces a product which contains molecules which result from the condensation of two molecules of diepoxides with one molecule of diacid, as well as other oligomeric species or unreacted epoxide depending on the mole or equivalent ratios of the epoxy resin to the carboxylic acid groups and the amount of time the reaction is allowed to proceed. The reaction may be stopped before completion, in which case monoepoxy monoacid species will be present in the product mixture. Preferably, excess of the epoxy resin (mole ratio of the epoxy resin to carboxylic acid being greater than 2:1) is used to minimize the formation of the polyesterified species. If desired the diepoxide product or a mixture containing predominantly diepoxide product (diepoxide being the largest component in the mixture) can be recovered from the reaction mixture by conventional techniques.

The catalysts are bases or metal chelates such as, for example, ammonium compounds, phosphonium compounds, tertiary amines, and phosphines. Examples of more preferred catalysts include, for example, triphenylphosphonium acid acetate, ethyltriphenyl phosphonium iodide, benzyldimethylamine, triphenylphosphine, tributylamine, aluminum salicylates, tetramethylammonium hydroxide and the like. The amount of catalyst present is preferably from 0.005, more preferably from 0.01, to 1.0, more preferably to 0.5 weight percent based on the total weight of the epoxy resin and the carboxylic acid.

Examples 1-7 demonstrate the preparation of the diacid terminated polyalkylene glycols. Examples 8-16 demonstrate the preparation of the epoxy-functional polyethers of the invention.

Polyethylene glycols (PEG) used in the examples below were obtained from Fluka Chemical Co. EPON Resin 828 (a diglycidyl ether of dihydric phenol having epoxy equivalent weight of 186-188) and EPONEX Resin 1510 (a hydrogenated diglycidyl ether of dihydric phenol having epoxy equivalent weight of 220) were obtained from Shell Chemical Company.

### EXAMPLE 1

Preparation of diacid terminated Polyethylene Glycol 6000.

Into a 500-ml flask were added 200.0 g of a polyethylene glycol (PEG) of molecular weight (MW) 6,000 (Fluka) and an equivalent amount (11.2 g) of 4-methylhexahydrophthalic anhydride (MHHPA). Under agitation the mixture was heated to 110 °C and held for 2 hours to prepare a diacid terminated material of equivalent weight 3,168.

### EXAMPLE 2

Preparation of diacid terminated Polyethylene Glycol 6000.

Into a 500-ml flask were added 200.0 g of a PEG of MW 6,000 (Fluka) and an equivalent amount (11.2 g) of MHHPA. Under agitation the mixture was heated to 110 °C and held for 2 hours to prepare a diacid terminated material of equivalent weight 3,168.

### EXAMPLE 3

Preparation of diacid terminated Polyethylene Glycol 8000.

Into a 500-ml flask were added 150.0 g of a PEG of MW 8,000 (Fluka) and an equivalent amount (6.3 g) of MHHPA. Under agitation the mixture was heated to 110 °C and held for 2 hours to prepare a diacid terminated material of equivalent weight 4,168.

### EXAMPLE 4

Preparation of diacid terminated Polyethylene Glycol 3000.

Into a 500-ml flask were added 200.1 g of a PEG of MW 3,000 (Fluka) and an equivalent amount (22.4 g) of MHHPA. Under agitation the mixture was heated to 110 °C and held for 2 hours to prepare a diacid terminated material of equivalent weight 1,668.

### EXAMPLE 5

Preparation of diacid terminated Polyethylene Glycol 10000.

Into a 500-ml flask were added 200.0 g of a PEG of MW 10,000 (Fluka) and an equivalent amount (6.7 g) of MHHPA. Under agitation the mixture was heated to 110 °C and held for 2 hours to prepare a diacid terminated material of equivalent weight 5,168.

### EXAMPLE 6

Preparation of diacid terminated Block Copolymer of Polyethylene Glycol and Polypropylene Glycol.

Into a 500-ml flask were added 100.1 g of a polyethylene glycol/polypropylene glycol block copolymer of MW 11,400 (PLURONIC F88 available from BASF (PLURONIC is a trademark)) and an equivalent amount (3.0 g) of MHHPA. Under agitation the mixture was heated to 110 °C and held for 1.5 hours to prepare a diacid terminated material of equivalent weight 5,868.

### EXAMPLE 7

Preparation of diacid terminated Polyethylene Glycol 3000.

Into a 500-ml flask were added 200.0 g of a PEG of MW 3,000 (Fluka) and an equivalent amount (22.4 g) of MHHPA. Under agitation the mixture was heated to 110 °C and held for 2 hours to prepare a diacid terminated material of equivalent weight 1,668.

### EXAMPLE 8

Preparation of Epoxy Resin Modified with Diacid Terminated Polyethylene Glycol 6000 (Residual Unreacted Acid).

Into a 500-ml flask were added 150.1 g of the product from Example 1 and 44.3 g (5 equivalents) of a bisphenol-A epoxy resin (EPON Resin 828 from Shell Chemical Company) having an equivalent weight of 186 g/eq. Under agitation, the mixture was heated to 100 °C, and 0.056 g of ethyltriphenylphosphonium iodide was added. The mixture was held at 100 °C for 1.5 hours to prepare a material with an acid value of 0.102 meq/g. n = 136.

### EXAMPLE 9

Preparation of Epoxy Resin Modified with Diacid Terminated Polyethylene Glycol 6000 (Residual Unreacted Acid).

Into a 500-ml flask were added 150.0 g of the product from Example 2, 88.7 g (10 equivalents) of a bisphenol-A epoxy resin (EPON Resin 828 from Shell Chemical Company) having an equivalent weight of 186 g/eq, and 0.061 g of ethyltriphenylphosphonium iodide. Under agitation, the mixture was heated to 100 °C and held for 1.5 hours to prepare the modified resin with an acid value of 0.067 meq/g. n = 136.

### EXAMPLE 10

Preparation of Epoxy Resin Modified with Diacid Terminated Polyethylene Glycol 8000 (Residual Unreacted Acid).

Into a 500-ml flask were added 125.0 g of the product from Example 3, 56.1 g (10 equivalents) of a bisphenol-A epoxy resin (EPON Resin 828 from Shell Chemical Company) having an equivalent weight of 186 g/eq, and 0.034 g of ethyltriphenylphosphonium iodide. Under agitation, the mixture was heated to 100 °C and held for 1.5 hours to prepare the modified resin with an acid value of 0.104 meq/g. n = 182.

### EXAMPLE 11

Preparation of Epoxy Resin Modified with Diacid Terminated Polyethylene Glycol 3000 (Residual Unreacted Acid).

Into a 500-ml flask were added 150.0 g of the product from Example 4, 168.2 g (19 equivalents) of a bisphenol-A epoxy resin (EPON Resin 828 from Shell Chemical Company) having an equivalent weight of 186 g/eq, and 0.070 g of ethyltriphenylphosphonium iodide. Under agitation, the mixture was heated to 100 °C and held for 1.5 hours to prepare the modified resin with an acid value of 0.122 meq/g. n = 68.

### EXAMPLE 12

Preparation of Epoxy Resin Modified with Diacid Terminated Polyethylene Glycol 10000 (Residual Unreacted Acid).

Into a 500-ml flask were added 100.0 g of the product from Example 5, 36.1 g (10 equivalents) of a bisphenol-A epoxy resin (EPON Resin 828 from Shell Chemical Company) having an equivalent weight of 186 g/eq, and 0.033 g of ethyltriphenylphosphonium iodide. Under agitation, the mixture was heated to 100 °C and held for 1.5 hours to prepare the modified resin with an acid value of 0.047 meq/g. n = 227.

### EXAMPLE 13

Preparation of Epoxy Resin Modified with Diacid Terminated Block Copolymer of Polyethylene Glycol and Polypropylene Glycol (Complete Reaction of Acid).

Into a 500-ml flask were added 84.0 g of the product from Example 6, 53.6 g (20 equivalents) of a bisphenol A epoxy resin (EPON Resin 828 from Shell Chemical Company) having an equivalent weight of 186 g/eq, and 0.028 g of ethyltriphenylphosphonium iodide. Under agitation, the mixture was heated to 100 °C and held for 2.0 hours to prepare the modified resin with an acid value of <0.001 meq/g. n = 104, m = 39 and o = 104.

### EXAMPLE 14

Preparation of Epoxy Resin Modified with Diacid Terminated Polyethylene Glycol 6000 (Complete Reaction of Acid).

The product from Example 9 was placed into an oven heated to 130 °C and held for 0.5 hours to prepare the modified resin with an acid value of <0.001 meq/g. n = 136.

### EXAMPLE 15

Preparation of Epoxy Resin Modified with Diacid Terminated Polyethylene Glycol 3000 (Complete Reaction of Acid).

The product from Example 11 was placed into an oven heated to 130 °C and held for 1.0 hours to prepare the modified resin with an acid value of <0.001 meq/g. n = 68.

### EXAMPLE 16

Preparation of Epoxy Resin Modified with Diacid Terminated Polyethylene Glycol 3000 (Complete Reaction of Acid).

Into a 500-ml flask were added 168.2 g of the product from Example 7, 150.0 g (8 equivalents) of a bisphenol A epoxy resin (EPON Resin 828 from Shell Chemical Company) having an equivalent weight of 186 g/eq, and 0.065 g of ethyltriphenylphosphonium iodide. Under agitation, the mixture was heated to 100 °C and held for 2.0 hours to prepare the modified resin with an acid value of <0.01 meq/g. n = 68.

## Claims

1. An aqueous based epoxy resin composition, comprising an epoxy resin and as emulsifier and/or reactive diluent a product produced by reacting (a) a carboxylic acid having the formula: 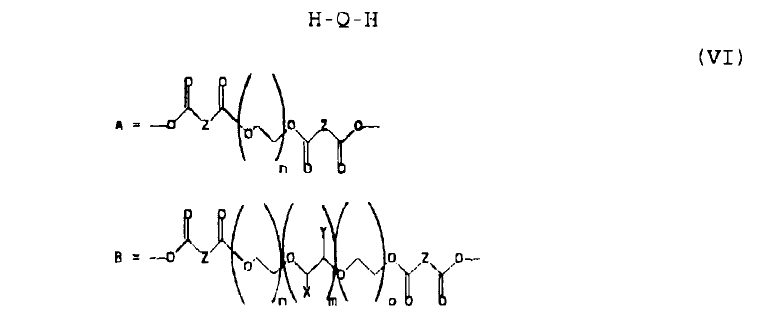 wherein Q is A or B, Z is a C₁₋₂₀ hydrocarbylene moiety, X and Y are independently a hydrogen, methyl or ethyl group with the provision that if X is methyl or ethyl, Y is hydrogen or if Y is methyl or ethyl, X is hydrogen, and n or n+m+o is a positive real number from 1 to 450 and (b) an epoxy resin having a functionality of at least 1.5 epoxide group per molecule in a carboxylic acid to epoxy resin mole ratio of from 1:2 to 1:20.

2. The aqueous epoxy resin composition of claim 1, wherein n or n+m+o is a positive real number from 6 to 200.

3. The aqueous epoxy resin composition according to claims 1 and 2, wherein the epoxy resin reactant (b) is a hydrophobic epoxy resin.

4. The aqueous epoxy resin composition of claims 1-3, wherein the epoxy resin has the formula 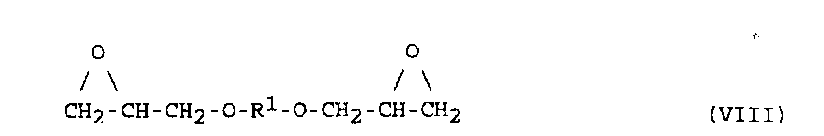 wherein R¹ is divalent aliphatic, divalent cycloaliphatic divalent aryl, or divalent arylaliphatic group.

5. The aqueous epoxy resin composition of claims 1-4 wherein the epoxy resin is a diglycidyl ether of a dihydric phenol or a diglycidyl ether of a hydrogenated dihydric phenol.

6. Aqueous coating composition, comprising a composition of claims 1-5.

## Patentansprüche

1. Epoxyharzzusammensetzung auf wäßriger Basis, umfassend ein Epoxyharz und als Emulgator und/oder reaktives Verdünnungsmittel ein Produkt, das durch Umsetzen (a) einer Carbonsäure mit der Formel: 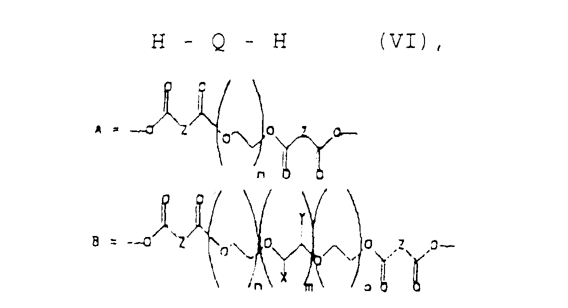 worin Q für A oder B steht, Z einen C₁₋₂₀ Hydrocarbylenrest bedeutet und X und Y unabhängig eine Wasserstoff-, Methyl- oder Ethylgruppe mit der Maßgabe darstellen, daß dann, wenn X Methyl oder Ethyl bedeutet, Y Wasserstoff ist oder dann, wenn Y Methyl oder Ethyl bedeutet, X Wasserstoff ist und n oder n+m+o eine positive reale Zahl von 1 bis 450 bedeuten, mit (b) einem Epoxyharz mit einer Funktionalität von wenigstens etwa 1,5 Epoxidgruppen pro Molekül bei einem Molverhältnis von Carbonsäure zu Epoxyharz von 1:2 bis 1:20 hergestellt wird.

2. Wäßrige Epoxyharzzusammensetzung nach Anspruch 1, worin n oder n+m+o eine positive reale Zahl von 6 bis 200 bedeuten.

3. Wäßrige Epoxyharzzusammensetzung nach den Ansprüchen 1 und 2, worin die Epoxyharzreaktionskomponente (b) ein hydrophobes Epoxyharz ist.

4. Wäßrige Epoxyharzzusammensetzung nach den Ansprüchen 1 bis 3, worin das Epoxyharz die Formel: 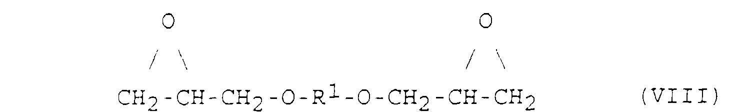 hat, worin R¹ eine zweiwertige aliphatische, zweiwertige cycloaliphatische, zweiwertige Aryl- oder zweiwertige arylaliphatische Gruppe bedeutet.

5. Wäßrige Epoxyharzzusammensetzung nach den Ansprüchen 1 bis 4, worin das Epoxyharz ein Diglycidylether eines zweiwertigen Phenols oder ein Diglycidylether eines hydrierten zweiwertigen Phenols ist.

6. Wäßrige Beschichtungszusammensetzung umfassend eine Zusammensetzung nach den Ansprüchen 1-5.

## Revendications

1. Composition de résine époxy à base aqueuse, comprenant une résine époxy et, à titre d'émulsif et/ou de diluant réactif, un produit obtenu par la réaction (a) d'un acide carboxylique répondant à la formule : 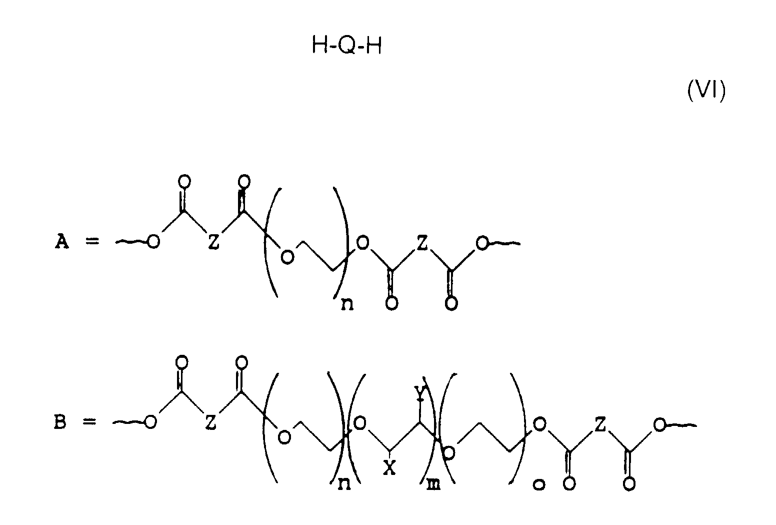 dans laquelle Q est A ou B, Z est un groupement hydrocarbylène en C₁ à C₂₀, X et Y représentent indépendamment chacun un atome d'hydrogène, un radical méthyle ou éthyle, avec la condition que si X représente un radical méthyle ou éthyle, Y représente un atome d'hydrogène ou que si Y représente un radical méthyle ou éthyle, X représente un atome d'hydrogène et n ou n+m+o représente un nombre réel positif de 1 à 450 et (b) une résine époxy possédant une fonctionnalité d'au moins 1,5 radical époxyde par molécule en un rapport molaire acide carboxylique à résine époxy de 1:2 à 1:20.

2. Composition de résine époxy aqueuse suivant la revendication 1, dans laquelle n ou n+m+o est un nombre réel positif qui varie de 6 à 200.

3. Composition de résine époxy aqueuse suivant les revendications 1 et 2, dans laquelle le réactif du type résine époxy (b) est une résine époxy hydrophobe.

4. Composition de résine époxy aqueuse suivant les revendications 1 à 3, dans laquelle la résine époxy possède la formule 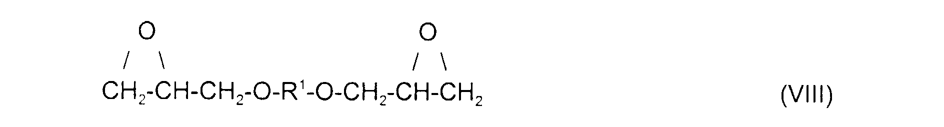 dans laquelle R¹ représente un radical aliphatique divalent, cycloaliphatique divalent, aryle divalent, ou arylaliphatique divalent.

5. Composition de résine époxy aqueuse suivant les revendications 1 à 4, dans laquelle la résine époxy est un éther diglycidylique d'un phénol dihydroxylé, ou un éther diglycidylique d'un phénol dihydroxylé hydrogéné.

6. Composition de revêtement aqueuse, qui comprend une composition suivant les revendications 1 à 5.
